# EUROPEAN PATENT SPECIFICATION

(11) **EP 4 519 696 B1**
(45) Date of publication and mention of the grant of the patent: **17.06.2026**
(21) Application number: 23712182.7
(22) Date of filing: 14.03.2023
(51) Int. Cl.: G01P 1/08, G01P 3/64, G01P 11/00, G04B 19/18, G04B 47/04, G04B 47/06, G04F 10/00, G04G 9/00, G04G 21/02, G04F 7/00

(54) **RACING TACHYMETER**
RENNTACHYMETER
TACHYMÈTRE DE COURSE

(30) Priority: 06.05.2022 CH 5302022
(43) Date of publication of application: 12.03.2025
(73) Proprietor: Brooklands Watch Co., London EC4R 3TT (GB)
(72) Inventor: JEFFS, Simon Charles, Henley On Thames, RG9 6TH (GB)
(74) Representative: Braunpat AG
(86) International application number: PCT/EP2023/056481
(87) International publication number: WO 2023/213467

(56) References cited:
- WO-A1-2011/004193
- DE-A1- 102007 005 592
- GB-A- 729 417
- JP-A- 2018 077 239

## Description

The present invention relates to a tachymeter device comprising a speed scale and a pointer movable along the speed scale to indicate a speed of a moving object, such as a motor vehicle or boat, according to the preamble of patent claim 1. Particularly, the present invention relates to a racing tachymeter device for racing cars.

Stopwatches and timepieces with a tachymeter function are used to measure and indicate the average speed of moving objects like cars, motor bikes or boats based on a distance covered over a time interval. They comprise a scale indicating speed units, for example in kilometers, miles or nautical miles per hour. The stopwatch is started when the moving object passes a start marker and is stopped at a second marker once a known distance had been covered by the moving object. A pointer indicates the resulting average speed on the scale. Further, it is difficult to identify when the car has reached the defined distance away from the start mark. So the stopping of the timer can be unprecise and causes flaws in the speed indication.

It is known to provide tachymeter devices on wristwatches. For example, the document DE 10 2007 005 592 A1 discloses a wristwatch that comprises circular speed scales displayed on a bezel of the watch. A first speed scale includes three concentric rows of speed units to cover a speed range between 125 km/h and 178 km/h used to indicate a speed on a racing course. A second speed scale, arranged concentrically inside the first scale, covers a speed range between 140 km/h und 260 km/h indicating a speed on a test course. A pushbutton is used to start a timer when a car passes a start mark and to stop the timer when a second marker located at a defined distance after the start mark is reached by the car. A finger rotating around the center axis of the scales indicates the average speed of the object on the first and the second scale. A third scale is located inside the two average speed scales for indicating which of the three concentric rows of the first speed scale has to be used to read the average speed. As a result the watch-face of this wristwatch is cluttered with indications that are hard to read and difficult to be distinguished. Speed reads derived from this wristwatch can easily be inaccurate. Another wristwatch with a tachymeter device and a stopwatch function for indicating an average speed of a moving object is known from JP 2018 077239 A.

It is an object of the present invention to provide a tachymeter device that reliably reflects the average speed of a moving object, covers a wide range of speed indications, covers a wide range of defined distances, facilitates accurate speed readings, allows for a simple handling of the device and provides an instant average speed reading for various defined distances.

These and other objects are fulfilled by a tachymeter device according to independent claims 1 and a wristwatch according to independent claims 10. Advantageous features and preferred embodiments of the tachymeter device and the wristwatch according to the invention are disclosed in dependent claims 2 to 9.

According to the present invention a tachymeter device for indicating an average speed of a moving object comprises a timer and an activator for manually starting the timer, when the object passes a starting mark and stopping the timer, when the object passes a defined distance from the starting mark. The timer measures the time that the moving object needs to cover the defined distance. Further, the tachymeter device comprises a housing, a scale on the housing for indicating an average speed of the moving object and a pointer for indicating a measured average speed on the scale, wherein the measured average speed is derived from the defined distance and a time needed by the moving object to cover said defined distance measured by the timer. The scale on the housing of the tachymeter device according to the present invention is designed as a scale part that is arranged detachably at the housing. Further, the scale part is selected from a set of scale parts comprising a plurality of differing scale parts each having a scale with speed indication units for indicating speed ranges corresponding to differing pre-defined distances. The set of scale parts is provided with the tachymeter device. A user of the device can choose the scale part that corresponds to the pre-defined distance to be covered by the moving object.

The tachymeter device according to the invention can be easily adapted for measuring an average speed on a variety of different pre-defined distances. A scale part corresponding to a pre-defined distance can simply be detached from the housing and another scale part corresponding to another pre-defined distance can be attached at the housing. This way the tachymeter device can for example be used for different racing courses for cars or motor bikes, for different regatta courses of boats or for different race courses of horse races. Advantageously, the speed indication units on each of the scale parts cover typical average speed values for each of the differing pre-defined distances for a specific moving object. Also, the distancing of the speed indication units from each other can be adjusted such that the extension of the scale matches the size of the scale part and there are no overlapping speed indication units. This way the measured average speed can be easily and accurately read on the scale part.

Therefore, in one embodiment of the tachymeter device of the present invention each of the scale parts of the set of scale parts can correspond to a known track defining a different pre-defined distance for each of the different scale parts and the speed indication units on a scale part for a pre-defined track cover a range of typical average speeds of a moving object for said pre-defined track. Preferably, the distancing of the speed indication units on the scale part is selected such that the scale covers only one row of indication units to keep the scale uncluttered and easy to read.

In a preferred embodiment of the tachymeter device the speed indication units on the scale part for said pre-defined track range from an average speed of a slowest moving object on said track to the average speed of a fastest moving object on said track. For example, the pre-defined tracks and their corresponding scale parts used with the tachymeter device are racing tracks for cars and the tachymeter device is used to measure the average speed of cars on the different pre-defined tracks. In this case the speed indication units on the scale part for the pre-defined racing track can range from an average speed of a slowest car on a wet racing day on said track to the average speed of a fastest car on a dry racing day on said track. Additionally, it is preferred that the scale part indicates a record speed for said pre-defined track that has been achieved by the moving object, like the car. This way the performance of the moving object can easily be compared the past speed results by such a moving object. Optionally, the scale part also indicates a slowest speed of a moving object for said pre-defined track.

Preferably, the distancing of the speed indication units on the scale part is selected such that the scale covers only one row of indication units to keep the scale uncluttered and easy to read.

In a further embodiment of the tachymeter device according to the present invention the scale parts of the set of scale parts are designed as a circular bezel of a wristwatch, wherein speed indication units on the bezel for indicating speed ranges are displayed on a circular surface of the bezel. A bezel representing a particular scale part can be attached to the housing of the wristwatch, which serves as the housing of the tachymeter device.

A distance between speed indication units on each of the bezels is adapted to the range of typical average speeds for a pre-defined track such that the speed indication units may cover only a portion of a circular surface of a bezel or the whole surface. In an advantageous embodiment of the tachymeter device the speed indication units of a scale part form cover only half or less of the circular surface of the bezel, for example they cover about one third of the circular surface. For example, the scale is only arranged in the lower part of a watch when the bezel is attached to the watch. This way individual scales for different parameters provided by the watch, for example the time, the date, seconds and the average speed, are located in different areas on the watch. A user can quickly and reliably read the values of the different parameters and in particular can easily identify the average speed measured by the tachymeter device.

In a further embodiment of the tachymeter device according to the present invention each of the scale parts of the set of scale parts corresponds to a loop track, wherein a length of the loop track defines the pre-defined distance for said scale part for said loop track. The starting mark is defined as a location on the loop track represented by the corresponding scale part. For example, the starting mark can be defined as the position of a person standing at the loop track and watching the moving object. A stopping mark for stopping the timer corresponds to the starting mark after the moving object has covered one lap on the loop track. Therefore, the stopping mark is also indicated by the position of the person standing at the loop track and watching the moving object after it passed one lap on the loop track. With such a scale part the average speed of successive laps of the moving object on the loop track can easily be determined and the different average speed values can be compared.

In still a further embodiment of the tachymeter device according to the present invention an attachment for releasably attaching a scale part to the housing is realized by a first mounting section on the housing and a second mounting section on the scale part, wherein the first mounting section and the second mounting section engage in a form fit or a friction fit when the scale part is attached to the housing. For example, a form fit of the mounting sections can be realized by a clip connection, wherein edges of the two mounting sections flexibly engage with each other. Further, the form fit can be realized by a screw connection or a bayonet connection between the mounting sections. A friction fit can be realized for example by a press fit creating friction forces between the mounting sections that keep the sections engaged.

In a preferred embodiment of the tachymeter device of the present invention the set of scale parts includes a number of individual scale parts, that corresponds to the number of pre-defined racing tracks establishing a racing series for a type of moving objects over one year. For example, the set of scale parts includes scale parts for each of the race tracks of a Formula 1 racing series for race cars in a given year. A user of the tachymeter device who is attending several of the races of the Formula 1 series can easily modify the tachymeter device to the pre-defined track length of a specific race of the series by choosing and attaching the scale part corresponding to the pre-defined race track at the housing of the device. For example, the set of scale parts may include individualized scale parts for the Grand Prix series in Monaco, Britain, Belgium, Brazils, Denmark, etc. The set of scale parts will provide a specific scale part for each of the 23 Grand Prix races, which may be differ in the predetermined track length, the average lowest and highest speed indications, and the lap record indication.

The user can simply watch the race from a gallery or platform at the race course and determine the average speed for each lap of the racing track by activating the timer. The average speed for each lap, for a series of laps or for the whole race can be determined by the tachymeter device.

In a further aspect the present invention refers to a wristwatch comprising a tachymeter device as described above. The wristwatch at least comprises a housing, a watch face with a preferably round shape, a time scale for the time of the day, and fingers to indicate the time on the time scale. Elements of the tachymeter device can be realized as integral parts of the wristwatch, except the scale parts that are attached to the watch housing. For example the pointer for indicating the average speed on the scale part can be an additional finger of the wristwatch and move around a center axis of the wristwatch just like the fingers of the watch. Further, the wristwatch may comprise a timer and an activator for the timer which can be used as the timer and activator of the tachymeter device.

The wristwatch according to the present invention can be easily adjusted for the use of determining the average speed of moving objects on tracks of different pre-defined distances by simply exchanging the scale parts. The measured speed is clearly indicated in a well-defined area on the watch and does not interfere with other indications, like for example the time indication.

Several exemplary embodiments of the invention will be illustrated in the following drawings, which merely serve for explanation and should not be construed as being restrictive. The features of the invention becoming obvious from the drawings should be considered to be part of the disclosure of the invention both on their own and in any combination. The drawings show:
- Fig. 1:: a 3-dimensional, exploded view of a tachymeter device with a first scale part according to the present invention,
- Fig. 2:: the tachymeter device of Figure 1 in an assembled manner, and
- Fig. 3:: a top view on a second scale part of the tachymeter device of Figure 1.

In the following description certain terms are used for reasons of convenience and are not intended to limit the invention. The terms "right", "left", "up", "down", "under" and "above" refer to directions in the figures. The terminology comprises the explicitly mentioned terms as well as their derivations and terms with a similar meaning. Also, spatially relative terms, such as "beneath", "below", "lower", "above", "upper", "proximal", "distal", and the like, may be used to describe one element's or feature's relationship to another element or feature as illustrated in the figures.

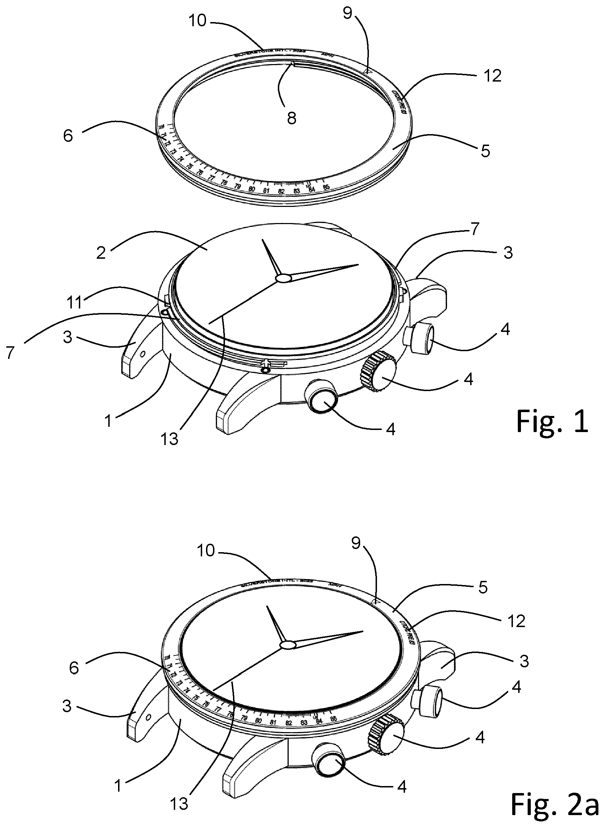

Figure 1 shows a tachymeter device for indicating an average speed of a moving object according to the invention that is used in combination with a wristwatch. The wristwatch comprises a housing, which also serves as a housing 1 of the tachymeter device. The housing 1 essentially comprises a circular flat shape, wherein a surface 2 of the flat shape can be used as an area for a watch face for a time scale and fingers indicating the time on the time scale (not shown). The fingers may rotate around a center axis of the watch face as commonly known. Alternatively, the flat shape may comprise a display for digital time indication. The housing 1 comprises two pairs of extensions 3, wherein the pairs are arranged on opposing sides of the housing. The extension pairs serve as attachments for a wristband.

The tachymeter device further comprises a timer and an activator 4 for manually starting and stopping the timer. While there are three activators 4 indicated in the figures. Any of these activators can be selected as being the activator for the time, while the other activators may serve for other functionalities of the watch. The timer can be an integral unit of the wristwatch or can be used solely for determining the average speed by the tachymeter device. A scale part 5 comprises a scale 6 with speed indication units for indicating an average speed of the moving object. A pointer 13 for indicating a measured average speed on the scale 6 is arranged on the surface 2 of the watch face. The pointer is preferably arranged to rotate around the center axis of the watch face just like the fingers of the wristwatch.

The scale part 5 can be detached from the housing 1 as shown in Figure 1. The scale part is selected from a set of scales parts (not shown) comprising a plurality of differing scale parts. Each of the scale parts has a scale with speed indication units for indicating speed ranges corresponding to differing pre-defined distances. The pre-defined distance serves as the basis for customizing each of the scale parts to specific features of a track or race course comprising a pre-defined length. For example, different scale parts may differ in the scale range for average speed indications for a given track or course length, or for different surface or weather conditions for a given track or course length or for different race series.

The scale part 5 has a circular ring-like form and serves as a bezel of the wristwatch. The scale 6 is located on the upper surface of the scale part 5, while the scale part 5 is attached with the opposite lower surface to the wristwatch. The scale part 5 is detachably mounted to the housing 1 by a first mounting section 7 on the housing 1 and a second mounting section 8 on the scale part 5. The first mounting section 7 has the form of a lip extending radially from the circumference of the housing 1. The lip stretches over a little less than a quarter of the housing circumference. The first mounting section 7 includes two of such lips that extend from the housing on opposing sides. The second mounting section 8 has the form of a lip that extends radially from an inner circumferential wall of the scale part 5. The first mounting section 7 includes two of such lips that extend on opposing sides from the circumferential wall. These lips stretch over a little less than a quarter of the circumferential wall. For attaching the scale part 5 to the housing 1, it is positioned on the housing 1 such that the lips of the second mounting section 8 are aligned with the lip-free areas of the circumference of the housing 1. Thus, when the scale part 5 is put on the surface 2 of the housing 1, the lips of the second mounting section 8 can pass the lips of the first mounting section 7 and slide down along the housing circumference until the scale part 5 rests on the surface 2 of the housing 1. In this position the lips of the second mounting section 8 are located further away than the lips of the first mounting section 7 with respect to the surface 2. Next, the scale part 5 is turned relative to the housing 1 and the lips of the second mounting section 8 slide beneath the lips of the first mounting section 7. In this position the scale part 5 cannot be lifted up anymore from the housing 1 because the lips of the second mounting section 8 engage with the lips of the first mounting section 7. The scale part 5 is rotated on the housing 1 until protrusions (not shown) on the scale part 5 snap into recesses 11 at the housing.

Thus, the scale part 5 is securely attached to the housing 1 in a form fit. This position defines the correct attachment position of the scale part 5 on the housing 1 for indicating the average speed of a moving object on the scale 6. A locator sign 9 on the scale part 5 is aligned with a control sign (not shown) on the watch face, like the 12 o'clock digit of the watch face. This alignment helps to guarantee the correct positioning of the scale part 5 on the housing 1. To detach the scale part 5 from the housing 1 it can be turned on the housing to overcome the snap fit until the lips of the second mounting section 8 are aligned with the lip-free areas of the circumference of the housing 1. In this position the scale part 5 can be lifted up from the housing 1.

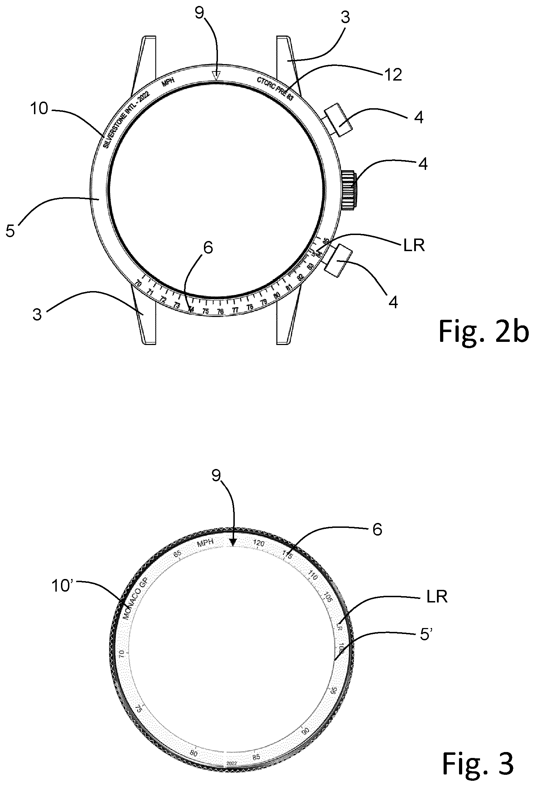

Figures 2a and 2b show the tachymeter device in an assembled state, wherein the scale part 5 is mounted on the housing 1. Figure 2a is a three-dimensional view and Figure 2b is a top view. As can be seen, the scale part 5 is realized as a bezel of the wristwatch.

The scale part 5 is customized for a pre-defined distance to be covered by a moving object, wherein in this embodiment of the scale part 5 the pre-defined distance corresponds to the Silverstone International Circuit in the year 2022, as indicated on the scale part 5 in the upper left area in Figure 2b, which displays the name 10 of the scale part 5. Therefore, the pre-defined distance is characterized by a loop track of 3,809 km, corresponding to 1,8508 miles. The scale part 5 is also customized in this embodiment for moving objects that are historic saloon cars in the CTCRC Pre-83 class. Fig 2b displays the name 12 on the scale part 5 in the upper right area.

The scale 6 on the Silverstone International Circuit scale part 5 covers a range of average speed indications starting from 70 miles per hour (mph) up to 85 mph, which covers the typical average speed results for this loop track that were achieved in the past, starting from the lowest average speed on a dry surface day up to the highest average speed on a dry surface day. Further, the scale 6 includes an indication LR for a lap record for the CTCRC Pre-83 class at Silverstone International Circuit, which is currently at 83,8 mph. In this example, the speed indication units for indicating the speed range correspond to the lowest and highest average speed results on this race course and extends a small portion below the lowest and above the highest average speed. A small portion means for example about 1 - 10%, preferably about 1 - 5%, of the lowest and/or the highest average speed results. For example, if the lap record is 83,8 mph, the scale indications would range up to around 85 mph. The distance between speed indication units on each of the scale parts is adapted to the range of typical average speeds for this pre-defined race track such that the scale 6 covers only a portion of the circular surface of the scale part 5. In this embodiment the scale 6 covers only about one third of the circular surface and shows speed indications to 0.1 mph.

The scale is arranged in the lower half of the scale part 5 and the surface 2 of the wristwatch, respectively. This way the remaining surface of the scale part 5 is free and can be used for other information like the name 10 of the race track and the racing series 12. The overall design of the watch face is clean and not cluttered by intertwined watch scales for different parameters.

In use the starting mark is defined by the location of a user of the tachymeter device along the Silverstone International Circuit, more specific it can be defined as a fixed point in front of the user. Once the race car of interest passes the user or the fixed point, the user activates the timer. Once the race car passes the user or the fixed point again after one lap on the race course again, the user stops the timer. The pointer indicates the average speed for the just completed lap, wherein the average speed is derived from the pre-defined distance and the time to cover said distance measured by the timer. The stopping mark for stopping the timer corresponds to the starting mark after the moving object has covered one lap of the race course. The user can easily see if the race car is in the lower or higher range of average speed results and can identify if the average speed is close to the lap record or even higher.

The Silverstone International Circuit scale part 5 described above is just one scale part of a set of scale parts according to the invention. Other scale parts of the set of scale parts may be customized for other race tracks that are longer or shorter than the Silverstone International Circuit. The scale on the scale part for a particular race track is customized by selecting the scale range and the indication for the loop record. Other race tracks and race series may include but are not limited to the following circuits, which are the 23 circuits of the formula 1:

| **Circuit** | **Circuit Length [miles]** | **Circuit Length [km]** | **Lap Record [mph]** |
|---|---|---|---|
| Red Bull Ring, Speilberg | 2.684 | 4.318 | 66.957 |
| Autódromo José Carlos Pace, Interlagos | 2.678 | 4.309 | 70.54 |
| Circuit Zandvoort, Zandvoort | 2.647 | 4.259 | 71.097 |
| Circuit Gilles-Villeneuve, Montreal | 2.710 | 4.361 | 73.078 |
| Circuit de Monte Carlo, Monaco | 2.074 | 3.337 | 74.26 |
| Autodromo Enzo e Dino Ferrari, Imola | 3.051 | 4.909 | 75.484 |
| Circuit de Barcelona-Catalunya, Barcelona | 2.893 | 4.655 | 78.441 |
| Autódromo Hermanos Rodriguez, Mexico City | 2.675 | 4.304 | 78.741 |
| Autodromo Nazionale Monza, Monza | 3.600 | 5.793 | 81.046 |
| Circuit Paul Ricard, Le Castellet | 3.605 | 5.8 | 82.74 |
| Albert Park Circuit, Melbourne | 3.296 | 5.303 | 84.125 |
| Sochi Autodrom, Sochi | 3.635 | 5.848 | 85.761 |
| Miami International Autodrome, Miami Gardens | 3.362 | 5.41 | 87 |
| Hungaroring, Budapest | 2.723 | 4.381 | 87.103 |
| Silverstone Circuit, Towcester | 3.661 | 5.891 | 87.369 |
| Jeddah Corniche Circuit, Jeddah | 3.838 | 6.175 | 90.734 |
| Suzuka Circuit | 3.732 | 6.004 | 90.983 |
| Bahrain International Circuit, Sakhir | 3.364 | 5.412 | 91.447 |
| Circuit of the Americas, Austin | 3.4 | 5.472 | 96.161 |
| Yas Marina Circuit | 3.452 | 5.554 | 99.283 |
| Marina Bay Circuit, Singapore | 3.147 | 5.063 | 101.905 |
| Baku City Circuit, Baku | 3.731 | 6.003 | 103.009 |
| Circuit Spa-Francorchamps, Stavelot | 4.353 | 7.004 | 105.1 |

Figure 3 shows another embodiment of a scale part 5' for the tachymeter device of the present invention. This scale part is customized for the pre-defined distance of the Monaco Grand Prix loop track, as indicated by the name 10'. The Monaco Circuit is 3,337 km, respectively 2,074 miles, long. The speed indication units for indicating the speed range cover the lowest and highest average speed results on this race course and extend from 65 mph to 120 mph. The lap record LR is 102 mph. A scale with divisions of 0.1 mph may be used but divisions on the Figure 3 example are kept to a minimum for clarity. The speed indication units are not equi-distanced. The distance between units of five increments in the lower speed range is higher than in the upper speed range. It is noted, that the scale starts from the locator sign 9 and extends counter clock-wise from the lowest speed indication to the highest speed indication. The indications on the lower half of the bezel are inverted with respect to the indications on the upper half of the bezel. This is to show that the bezel is in a fixed position on the housing and does not need to be rotated like bezels in prior art wristwatches. The bezel has a knurled edge for a good grip when the bezel needs to be attached or detached from the housing.

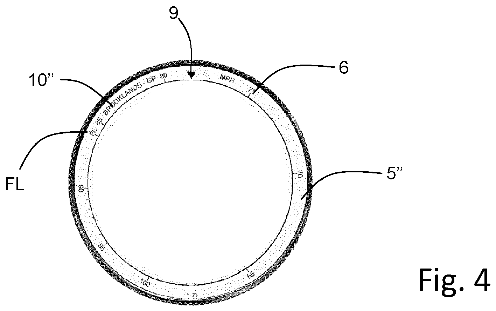

Figure 4 shows another embodiment of a scale part 5" for the tachymeter device of the present invention. This scale part is customized for the pre-defined distance of the Brookland Grand Prix loop track, as indicated by the name 10". The Brookland Circuit is 4,21 km, respectively 2,61 miles, long. The speed indication units for indicating the speed range cover the lowest and highest average speed results on this particular race course and extend from 65 mph to 100 mph. There is a marker FL in the embodiment of Figure 4 which stands for fastest lap. The speed indication units of this embodiment extend over nearly the full circle on the bezel. The scale extends counter clock-wise from the lowest speed indication to the highest speed indication. Again, the indications on the lower half of the bezel are inverted with respect to the indications on the upper half of the bezel and the bezel has a knurled edge.

In summary, the tachymeter device according to the present invention is intuitive, easy to handle and also decorative. The design of each scale part takes into consideration the length of the track, the type of racing, the speed of the moving object for a particular series and dry or wet conditions. It covers the slowest and fastest moving objects plus indicates the current lap record. In a preferred embodiment the tachymeter device is a circuit tachymeter, wherein the set of scale parts is designed for varying circuits of race courses of a racing season for racing cars. More than 95% of watch owners know how to use a timer function on a wristwatch. All that is required is to fit the correct bezel for the pre-defined distance, like a race circuit, to the housing.

In the following claims the word "comprising" does not exclude other elements or steps, and the indefinite article "a" or"an" does not exclude a plurality. A single unit or step may fulfil the functions of several features recited in the claims. The mere fact that certain measures are recited in mutually different dependent claims does not indicate that a combination of these measures cannot be used to advantage. The terms "essentially", "about", "approximately" and the like in connection with an attribute or a value particularly also define exactly the attribute or exactly the value, respectively. Any reference signs in the claims should not be construed as limiting the scope.

### Reference Numbers

- 1: housing
- 2: surface
- 3: extension pair
- 4: activator scale part
- 5,5', 5" 6: scale
- 7: first mounting section
- 8: second mounting section
- 9: locator sign name
- 10, 10', 10" 11: snap recesses
- 12: race series
- 13: pointer
- LR: lap record
- FL: fastest lap

## Claims

1. Tachymeter device for indicating an average speed of a moving object comprising
a timer and an activator (4) for manually starting the timer, when the object passes a starting mark and stopping the timer, when the object passes a defined distance from the starting mark, a housing (1), a set of scale parts comprising a plurality of differing scale parts (5, 5', 5"), a scale part (5, 5', 5") that is configured to be selected from the set of scale parts and having a scale (6) for indicating an average speed of the moving object and a pointer (13) for indicating a measured average speed on the scale (6), wherein the measured average speed is derived from said defined distance and a time to cover said defined distance measured by the timer,
wherein the scale part (5, 5', 5") is configured to be arranged detachably at the housing (1) and wherein the scale (6) of each scale part (5, 5', 5") has speed indication units for indicating speed ranges corresponding to differing pre-defined distances.

2. Tachymeter device according to claim 1, wherein each of the scale parts (5, 5', 5") of the set of scale parts corresponds to a track defining a different pre-defined distance for each of the different scale parts (5, 5', 5"), and wherein the speed indication units on a scale part for a pre-defined track cover a range of typical average speeds of moving objects for said pre-defined track.

3. Tachymeter device according to claim 2, wherein the speed indication units on the scale part (5, 5', 5") for said pre-defined track range from an average speed of a slowest moving object on said track to the average speed of a fastest moving object on said track.

4. Tachymeter device according to one of the preceding claims, wherein the scale parts (5, 5', 5") of the set of scale parts are designed as a circular bezel of a wristwatch having speed indication units for indicating speed ranges displayed on a circular surface of the bezel.

5. Tachymeter device according to claim 3 or 4, wherein a distance between speed indication units on each of the scale parts is adapted to the range of typical average speeds for the pre-defined track, and wherein the speed indication units cover only a portion of a circular surface of a bezel, preferably only half or less of the circular surface.

6. Tachymeter device according to one of the preceding claims, wherein each of the scale parts (5, 5', 5") of the set of scale parts corresponds to a loop track, wherein a length of the loop track defines the pre-defined distance for the corresponding scale part for said loop track, and wherein the starting mark is defined as a predefined location on the loop track of a scale part and a stopping mark for stopping the timer corresponds to the starting mark after the moving object has covered one lap on the loop track.

7. Tachymeter device according to one of the preceding claims, wherein the speed indication units of a scale part (5, 5', 5") for a track having a pre-defined distance includes an indication for a track record or a lap record for said track and/or a fastest lap for said track.

8. Tachymeter device according to one of the preceding claims, wherein an attachment for releasably attaching a scale part (5, 5', 5") to the housing (1) is realized by a first mounting section (7) on the housing and a second mounting section (8) on the scale part (5, 5', 5"), wherein the first mounting section (7) and the second mounting section (8) engage in a form fit or a friction fit when the scale part (5, 5', 5") is attached to the housing (1).

9. Tachymeter device according to one of the preceding claims, wherein the set of scale parts includes a number of individual scale parts (5, 5', 5"), that correspond to the number of pre-defined racing tracks establishing a racing series for a type of moving object over one year.

10. Wristwatch comprising a tachymeter device as defined in one of claims 1 to 9.

## Patentansprüche

1. Tachymeter-Vorrichtung zum Angeben einer Durchschnittsgeschwindigkeit eines sich bewegenden Objekts, umfassend
einen Zeitgeber und einen Aktivator (4) zum manuellen Starten des Zeitgebers, wenn das Objekt eine Startmarkierung passiert, und Stoppen des Zeitgebers, wenn das Objekt eine definierte Entfernung von der Startmarkierung passiert,
ein Gehäuse (1), einen Satz von Skalenteilen, umfassend eine Vielzahl von unterschiedlichen Skalenteilen (5, 5', 5"), ein Skalenteil (5, 5', 5"), das konfiguriert ist, um aus dem Satz von Skalenteilen ausgewählt zu werden und das eine Skala (6) zum Angeben einer Durchschnittsgeschwindigkeit des sich bewegenden Objekts und einen Zeiger (13) zum Angeben einer gemessenen Durchschnittsgeschwindigkeit auf der Skala (6) aufweist, wobei die gemessene Durchschnittsgeschwindigkeit aus der definierten Entfernung und einer Zeit, um die definierte Entfernung abzudecken, die durch den Zeitgeber gemessen wird, abgeleitet wird,
wobei das Skalenteil (5, 5', 5") konfiguriert ist, um an dem Gehäuse (1) lösbar angeordnet zu werden und
wobei die Skala (6) jedes Skalenteils (5, 5', 5") Geschwindigkeitsangabeeinheiten zum Angeben von Geschwindigkeitsbereichen aufweist, die unterschiedlichen vordefinierten Entfernungen entsprechen.

2. Tachymeter-Vorrichtung nach Anspruch 1, wobei jedes der Skalenteile (5, 5', 5") des Satzes von Skalenteilen einer Strecke entspricht, die eine unterschiedliche vordefinierte Entfernung für jedes der unterschiedlichen Skalenteile (5, 5', 5") definiert, und wobei die Geschwindigkeitsangabeeinheiten auf einem Skalenteil für eine vordefinierte Strecke einen Bereich üblicher Durchschnittsgeschwindigkeiten sich bewegender Objekte für die vordefinierte Strecke abdecken.

3. Tachymeter-Vorrichtung nach Anspruch 2, wobei die Geschwindigkeitsangabeeinheiten auf dem Skalenteil (5, 5', 5") für den vordefinierten Streckenbereich von einer Durchschnittsgeschwindigkeit eines langsamsten sich bewegenden Objekts auf der Strecke zu der Durchschnittsgeschwindigkeit eines schnellsten sich bewegenden Objekts auf der Strecke reichen.

4. Tachymeter-Vorrichtung nach einem der vorstehenden Ansprüche, wobei die Skalenteile (5, 5', 5") des Satzes von Skalenteilen als eine kreisförmige Lünette einer Armbanduhr, die Geschwindigkeitsangabeeinheiten zum Angeben von Geschwindigkeitsbereichen aufweist, die auf einer kreisförmigen Oberfläche der Lünette angezeigt werden, ausgebildet sind.

5. Tachymeter-Vorrichtung nach Anspruch 3 oder 4, wobei eine Entfernung zwischen Geschwindigkeitsangabeeinheiten auf jedem der Skalenteile auf den Bereich üblicher Durchschnittsgeschwindigkeiten für die vordefinierte Strecke angepasst ist, und wobei die Geschwindigkeitsangabeeinheiten nur einen Anteil einer kreisförmigen Oberfläche einer Lünette abdecken, vorzugsweise nur die Hälfte oder weniger der kreisförmigen Oberfläche.

6. Tachymeter-Vorrichtung nach einem der vorstehenden Ansprüche, wobei jedes der Skalenteile (5, 5', 5") des Satzes von Skalenteilen einem Rundkurs entspricht, wobei eine Länge des Rundkurses die vordefinierte Entfernung für das entsprechende Skalenteil für den Rundkurs definiert, und wobei die Startmarkierung als eine vordefinierte Stelle auf dem Rundkurs eines Skalenteils definiert ist und eine Stoppmarkierung zum Stoppen des Zeitgebers der Startmarkierung entspricht, nachdem das sich bewegende Objekt eine Runde auf dem Rundkurs abgedeckt hat.

7. Tachymeter-Vorrichtung nach einem der vorstehenden Ansprüche, wobei die Geschwindigkeitsangabeeinheiten eines Skalenteils (5, 5', 5") für eine Strecke, die eine vordefinierte Entfernung aufweist, eine Angabe für einen Streckenrekord oder einen Rundenrekord für die Strecke und/oder eine schnellste Runde für die Strecke einschließen.

8. Tachymeter-Vorrichtung nach einem der vorstehenden Ansprüche, wobei eine Anbringung zum ablösbaren Anbringen eines Skalenteils (5, 5', 5") an dem Gehäuse (1) durch einen ersten Montierabschnitt (7) an dem Gehäuse und einen zweiten Montierabschnitt (8) an dem Skalenteil (5, 5', 5") verwirklicht wird, wobei der erste Montierabschnitt (7) und der zweite Montierabschnitt (8) in einem Formschluss oder einem Reibschluss eingreifen, wenn das Skalenteil (5, 5', 5") an dem Gehäuse (1) angebracht ist.

9. Tachymeter-Vorrichtung nach einem der vorstehenden Ansprüche, wobei der Satz von Skalenteilen eine Anzahl von einzelnen Skalenteilen (5, 5', 5") einschließt, die der Anzahl vordefinierter Rennstrecken entspricht, die eine Rennserie für einen Typ eines sich bewegenden Objekts über ein Jahr erstellen.

10. Armbanduhr, umfassend eine Tachymeter-Vorrichtung wie in einem der Ansprüche 1 bis 9 definiert.

## Revendications

1. Dispositif de type tachymètre permettant d'indiquer la vitesse moyenne d'un objet en mouvement, comprenant
une minuterie et un activateur (4) pour démarrer manuellement la minuterie, lorsque l'objet passe un marquage de départ, et arrêter la minuterie, lorsque l'objet passe à une distance définie du marquage de départ,
un boîtier (1), un ensemble de parties à échelles comprenant une pluralité de parties à échelles (5, 5', 5") différentes, une partie à échelle (5, 5', 5") qui est conçue pour être choisie dans l'ensemble de parties à échelles et ayant une échelle (6) pour indiquer une vitesse moyenne de l'objet en mouvement et un indicateur (13) pour indiquer une vitesse moyenne mesurée sur l'échelle (6), dans lequel la vitesse moyenne mesurée est dérivée de ladite distance définie et d'un temps pour parcourir ladite distance définie mesuré par la minuterie,
dans lequel la partie à échelle (5, 5', 5") est conçue pour être agencée de manière amovible au niveau du boîtier (1) et
dans lequel l'échelle (6) de chaque partie à échelle (5, 5', 5") a des unités d'indication de vitesse pour indiquer des plages de vitesses correspondant à différentes distances prédéfinies.

2. Dispositif de type tachymètre selon la revendication 1, dans lequel chacune des parties à échelles (5, 5', 5") de l'ensemble de parties à échelles correspond à une piste définissant une distance prédéfinie différente pour chacune des parties à échelles (5, 5', 5") différentes, et dans lequel les unités d'indication de vitesse sur une partie à échelle pour une piste prédéfinie couvrent une plage de vitesses moyennes typiques d'objets en mouvement pour ladite piste prédéfinie.

3. Dispositif de type tachymètre selon la revendication 2, dans lequel les unités d'indication de vitesse sur la partie à échelle (5, 5', 5") pour ladite piste prédéfinie vont d'une vitesse moyenne d'un objet se déplaçant le plus lentement sur ladite piste à une vitesse moyenne d'un objet se déplaçant le plus rapidement sur ladite piste.

4. Dispositif de type tachymètre selon l'une des revendications précédentes, dans lequel les parties à échelles (5, 5', 5") de l'ensemble de parties à échelles sont conçues comme une lunette circulaire d'une montre-bracelet ayant des unités d'indication de vitesse pour indiquer des plages de vitesses affichées sur une surface circulaire de la lunette.

5. Dispositif de type tachymètre selon la revendication 3 ou 4, dans lequel une distance entre des unités d'indication de vitesse sur chacune des parties à échelles est adaptée à la plage de vitesses moyennes typiques pour la piste prédéfinie, et dans lequel les unités d'indication de vitesse ne couvrent qu'une partie d'une surface circulaire d'une lunette, de préférence seulement la moitié de la surface circulaire ou moins.

6. Dispositif de type tachymètre selon l'une des revendications précédentes, dans lequel chacune des parties à échelles (5, 5', 5") de l'ensemble de parties à échelles correspond à une piste en boucle, dans lequel une longueur de la piste en boucle définit la distance prédéfinie pour la partie à échelle correspondante pour ladite piste en boucle, et dans lequel le marquage de départ est défini comme un emplacement prédéfini sur la piste en boucle d'une partie à échelle et un marquage d'arrêt pour arrêter la minuterie correspond au marquage de départ après que l'objet en mouvement a parcouru un tour sur la piste en boucle.

7. Dispositif de type tachymètre selon l'une des revendications précédentes, dans lequel les unités d'indication de vitesse d'une partie à échelle (5, 5', 5") pour une piste ayant une distance prédéfinie comportent une indication pour un record de piste ou un record de tour pour ladite piste et/ou un tour le plus rapide pour ladite piste.

8. Dispositif de type tachymètre selon l'une des revendications précédentes, dans lequel une fixation pour la fixation amovible d'une partie à échelle (5, 5', 5") au boîtier (1) est réalisée par une première section de montage (7) sur le boîtier et une seconde section de montage (8) sur la partie à échelle (5, 5', 5"), dans lequel la première section de montage (7) et la seconde section de montage (8) viennent en prise dans un ajustement par complémentarité de forme ou un ajustement par friction lorsque la partie à échelle (5, 5', 5") est fixée au boîtier (1).

9. Dispositif de type tachymètre selon l'une des revendications précédentes, dans lequel l'ensemble de parties à échelles comporte un nombre de parties à échelles (5, 5', 5") individuelles qui correspondent au nombre de pistes de course prédéfinies établissant une série de courses pour un type d'objet en mouvement sur une année.

10. Montre-bracelet comprenant un dispositif de type tachymètre selon l'une des revendications 1 à 9.
